# EUROPÄISCHE PATENTSCHRIFT

(11) **EP 2 397 876 B1**
(45) Veröffentlichungstag und Bekanntmachung des Hinweises auf die Patenterteilung: **09.01.2019**
(21) Anmeldenummer: 11166467.8
(22) Anmeldetag: 18.05.2011
(51) Int. Cl.: G02B 6/00

(54) **Kraftfahrzeugbeleuchtungseinrichtung mit einem langgestreckten Lichtleiter**
Motor vehicle lighting device with an longitudinally extending optical waveguide
Dispositif d'éclairage de véhicule automobile doté d'un guide optique étendu en longueur

(30) Priorität: 21.06.2010 DE 102010025208
(43) Veröffentlichungstag der Anmeldung: 21.12.2011
(73) Patentinhaber: Automotive Lighting Reutlingen GmbH, 72762 Reutlingen (DE)
(72) Erfinder: Gebauer, Matthias, 72770 Reutlingen (DE)
(74) Vertreter: DREISS Patentanwälte PartG mbB

(56) Entgegenhaltungen:
- WO-A1-00/42456
- DE-A1-102008 021 290
- DE-B4-102004 047 653
- US-A1- 2006 171 137
- US-B2- 6 874 921

## Beschreibung

Die vorliegende Erfindung betrifft eine Kraftfahrzeugbeleuchtungseinrichtung nach dem Oberbegriff des Anspruchs 1.

Eine solche Kraftfahrzeugbeleuchtungseinrichtung ist aus der US 2006/0171137 A1 bekannt und weist einen langgestreckten ersten Lichtleiter auf, der eine Vorderseite, eine der Vorderseite gegenüberliegende und Lichtumlenkelemente aufweisende Rückseite sowie die Vorderseite und die Rückseite verbindende Seitenflächen aufweist. Der langgestreckte erste Lichtleiter ist dazu eingerichtet, Licht, das an seinen Seitenflächen und seiner Vorderseite interne Totalreflexionen erfährt, in einer Längsrichtung des Lichtleiters zu leiten. Der langgetreckte erste Lichtleiter ist ferner dazu eingerichtet, an seinen Lichtumlenkelementen reflektiertes Licht über seine Vorderseite austreten zu lassen. Die Vorderseite dient damit als Lichtaustrittsseite. Ein zweiter Lichtleiter ist dazu eingerichtet, Licht in den ersten Lichtleiter einzuspeisen.

Es ist auch aus der DE 10 2004 047 653 B4 bekannt, den ersten Lichtleiter als Leuchtring auszugestalten. Der Durchmesser des Leuchtrings beträgt ein Mehrfaches einer Abmessung eines Querschnitts des Lichtleiters. Seine Längsausdehnung ist entsprechend groß gegenüber seiner Querausdehnung, so dass die Bezeichnung als langgestreckter Lichtleiter gerechtfertigt ist.

Die Vorderseite und die Rückseite des ersten Lichtleiters der aus der DE 10 2004 047 653 B4 bekannten Kraftfahrzeugbeleuchtungseinrichtung liegt jeweils parallel zur Ringfläche. Aufgrund der Ringform weist der langgestreckte erste Lichtleiter keine Stirnflächen auf, zwischen denen er sich erstreckt und über die Licht eingekoppelt werden könnte. Der zweite Lichtleiter ist daher tangential an den ersten Lichtleiter angekoppelt. Eine Einkopplung von Licht in einen Lichtleiter, die nicht über Stirnflächen des Lichtleiters erfolgt, wird im Folgenden auch als Mitteneinkopplung bezeichnet.

Dabei erfolgt die tangentiale Einkopplung bei der bekannten Kraftfahrzeugbeleuchtungseinrichtung so, dass die mittlere Richtung, mit der Licht in den ersten Lichtleiter eintritt, im Wesentlichen in der Ringebene liegt.

Im Leuchtring propagierendes Licht, dass in einem flachen Einfallswinkel auf die Seitenflächen oder die Innenfläche der Vorderseite fällt, erfährt dort jeweils interne Totalreflexionen und verlässt daher den Lichtleiter nicht. Licht, dass dagegen auf die Umlenkelemente fällt, wird dort dagegen so reflektiert, dass es in einem vergleichsweise spitzen Winkel auf die Innenfläche der Vorderseite einfällt. Als Folge erfährt es dort keine interne Totalreflexion. Stattdessen tritt es durch die Vorderseite aus dem Lichtleiter aus. Die Vorderseite dient daher als Lichtaustrittsfläche. Die Lichtumlenkelemente des bekannten Lichtleiters sind gleichmäßig über den Umfang des Ringes verteilt in der Rückseite des ersten Lichtleiters angeordnet.

Daher erfolgt die Auskopplung von Licht entlang des gesamten Umfangs, beziehungsweise entlang der gesamten Länge des ersten Lichtleiters. Dies trägt zu einem gleichmäßigen Erscheinungsbild des leuchtenden Ringes bei. Es hat sich jedoch gezeigt, dass im Bereich der Einkopplung Inhomogenitäten in der Helligkeit des leuchtenden Ringes auftreten. Diese Inhomogenitäten treten zum Beispiel lokal in der Form unerwünschter Streifenmuster auf und stören damit das Erscheinungsbild.

Vor diesem Hintergrund besteht die Aufgabe der Erfindung in der Angabe einer Beleuchtungseinrichtung der eingangs genannten Art mit einer Mitteneinkopplung von Licht in den ersten Lichtleiter, bei der keine störenden Inhomogenitäten in der Helligkeit des ersten Lichtleiters auftreten.

Diese Aufgabe wird mit den Merkmalen des Anspruchs 1 gelöst. Die erfindungsgemäße Lösung zeichnet sich dadurch aus, dass im zweiten Lichtleiter propagierendes Licht über wenigstens eine der Seitenflächen des ersten Lichtleiters mit einer mittleren Lichtausbreitungsrichtung in den ersten Lichtleiter eintritt, deren zur Lichtaustrittsfläche des ersten Lichtleiters weisende und zu dessen Längsrichtung senkrechte Richtungskomponente kleiner ist als deren dazu und zur Längsrichtung senkrechte Richtungskomponente.

Bei einem Vergleich mit dem Leuchtring der aus der DE 10 2004 047 653 B4 bekannten Beleuchtungseinrichtung ergeben sich daher folgende Unterschiede und Vorteile. Die Erfindung basiert auf der folgenden Erkenntnis der Ursachen der störenden Inhomogenitäten, die das Erscheinungsbild beim Stand der Technik beeinträchtigen:
Bei dem aus der DE 10 2004 047 653 B4 bekannten Gegenstand liegt der zweite Lichtleiter in dem Bereich, in dem die Einkopplung von Licht in den ersten Lichtleiter stattfindet, in der Ringebene. Dadurch läuft das in den ersten Lichtleiter eingekoppelte Licht im Bereich der Einkopplung innerhalb des ersten Lichtleiters zunächst quer zu den Umlenkelementen, bevor es durch wiederholte interne Totalreflexionen die Richtung annimmt, die durch die Längsausdehnung des ersten Lichtleiters vorgegeben wird.

Im Bereich der Einkopplung ergibt sich damit beim Stand der Technik aus der DE 10 2004 047 653 B4 eine andere Verteilung der Strahlungsanteile auf die verschiedenen Raumrichtungen als in weiter von der Einkopplung entfernt liegenden Bereichen des ersten Lichtleiters. Diese innerhalb des ersten Lichtleiters auftretende Inhomogenität der Verteilung der Strahlungsanteile auf die verschiedenen Raumrichtungen bildet sich in den störenden Inhomogenitäten des äußeren Erscheinungsbildes des leuchtenden Lichtleiters ab.

Die Erfindung basiert auf der weiteren Erkenntnis, dass sich diese Inhomogenitäten aufgrund der Richtung der bekannten Mitteneinkopplung ergeben: Beim Gegenstand der eingangs genannten DE 10 2004 047 erfolgt die Einkopplung mehr oder weniger senkrecht zur Richtung des Lichtes, das durch Reflexion an den Lichtumlenkelementen ausgekoppelt wird. Als Folge ergibt sich in diesem Bereich ein streifenartiges Muster im Erscheinungsbild des leuchtenden Lichtleiters. Diese Streifen entstehen dadurch, dass die eingekoppelten Lichtstrahlen durch den Winkel zwischen Einkopplung und Lichtleiter gewissermaßen quer über die Prismen beziehungsweise Lichtumlenkelemente laufen und dann von der Seitenfläche des Lichtleiters reflektiert werden, bis sich die Strahlen entsprechend im Lichtleiter gemischt haben. Dieses Querlaufen ist bei dem von den Prismen als Lichtumlenkelementen ausgekoppelten Licht sichtbar und erzeugt die störenden Inhomogenitäten.

Die Erfindung zeichnet sich dagegen dadurch aus, dass das in den ersten Lichtleiter eintretende Licht eine mittlere Lichtausbreitungsrichtung besitzt, deren zur Lichtaustrittsfläche des ersten Lichtleiters weisende und zu dessen Längsrichtung senkrechte Richtungskomponente größer ist als deren dazu und zur Längsrichtung senkrechte Richtungskomponente.

Bei einer Anwendung der Erfindung auf einen Leuchtring liegt der Bereich, in dem die Einkopplung des Lichtes aus dem zweiten Lichtleiter in den ersten Lichtleiter stattfindet, dann nicht in der Ringebene, sondern zum Beispiel senkrecht dazu. Dadurch läuft das in den ersten Lichtleiter eingekoppelte Licht im Bereich der Einkopplung innerhalb des ersten Lichtleiters im Idealfall nicht quer zu der Reihe der Umlenkelemente. Zumindest wird der Anteil des quer zu dieser Reihe laufenden Lichtes an dem eingekoppelten Licht verringert, oder es wird der Grad des Querlaufens, also der Winkel zwischen dem gerade eingekoppelten Licht und dem bereits im Lichtleiter propagierenden Licht verringert.

Die vorliegende Erfindung erlaubt damit eine alternativ oder ergänzend zu einer von Enden eines Lichtleiters her erfolgenden Einkopplung von Licht erfolgende Mitteneinkopplung von Licht, die insbesondere den Vorteil hat, das Erscheinungsbild des langgestreckten Lichtleiters nicht zu stören, indem sie störende Helligkeitsinhomogenitäten vermeidet oder zumindest minimiert und insbesondere eine unterbrechungsfreie Anordnung von Lichtumlenkelementen erlaubt.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Dabei bezeichnen gleiche Bezugszeichen in den verschiedenen Figuren jeweils gleiche Elemente. Es zeigen, jeweils in schematischer Form:
- Fig. 1: eine Kraftfahrzeugbeleuchtungseinrichtung mit einem langgestreckten ersten Lichtleiter;
- Fig. 2: einen Abschnitt eines ersten langgestreckten Lichtleiters in einer perspektivischen und schematischen Ansicht;
- Fig. 3: eine perspektivische Darstellung einer Anordnung eines ersten Lichtleiters und eines zweiten Lichtleiters in einem Bereich, in dem beide optisch miteinander gekoppelt sind;
- Fig. 4: eine Einkopplung von Licht in einen ersten Lichtleiter, die über Seitenflächen des Lichtleiters erfolgt; und
- Fig. 5: einen Querschnitt durch die Anordnung der beiden gekoppelten Lichtleiter.

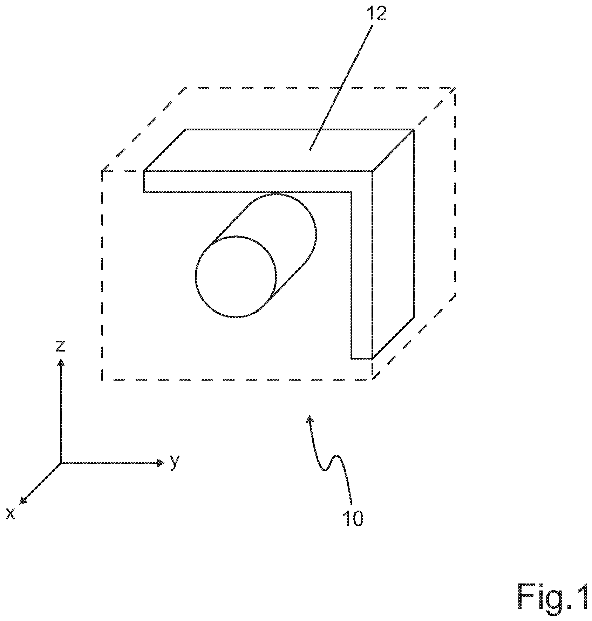

Im Einzelnen zeigt die Figur 1 eine Kraftfahrzeugbeleuchtungseinrichtung 10 mit einem langgestreckten ersten Lichtleiter 12 und einem Lichtmodul 14 sowie einem räumlichen Koordinatensystem mit Richtungen x, y und z. Bei der Beleuchtungseinrichtung 10 handelt es sich entweder um eine Signalfunktionen erfüllende Leuchte und/oder um einen Beleuchtungsfunktionen erfüllenden Scheinwerfer.

In der dargestellten Ausgestaltung ist das Lichtmodul 14 ein Scheinwerferlichtmodul, das ein Abblendlicht und/oder ein Fernlicht bereitstellt. Bei anderen Ausgestaltungen einer Kraftfahrzeugbeleuchtungseinrichtung kann das Lichtmodul 14 auch entfallen oder eine Signallichtfunktion erfüllen. Beispiele von Signallichtfunktionen sind Positionslichtfunktionen, Tagfahrlicht-, Blinklicht- und Bremslichtfunktionen. Alternativ oder ergänzend zur Erfüllung einer Signallichtfunktion kann der langgestreckte Lichtleiter 12 auch zur Erzeugung einer Nebellichtverteilung verwendet werden.

Aufgrund der Eignung des langgestreckten ersten Lichtleiters 12 zur Erfüllung genereller Signallichtfunktionen ist die Erfindung nicht auf eine Verwendung bei Scheinwerfern beschränkt und kann auch bei Heckleuchten oder Bugleuchten verwendet werden.

Die Beleuchtungseinrichtung 10 ist daher, je nach Ausgestaltung, eine beliebige Leuchte eines Kraftfahrzeugs. Die Raumrichtung x gibt eine Hauptabstrahlrichtung der Beleuchtungseinrichtung 10 an. Dient die Beleuchtungseinrichtung 10 als Schweinwerfer, entspricht die Richtung x der Fahrtrichtung. Bei einer Heckleuchte als Beleuchtungseinrichtung 10 ist die Richtung x entgegengesetzt zur Fahrtrichtung gerichtet. Die Raumrichtung y liegt parallel zu einer Querachse des Fahrzeugs und die Raumrichtung z liegt parallel zu einer Hochachse des Fahrzeugs.

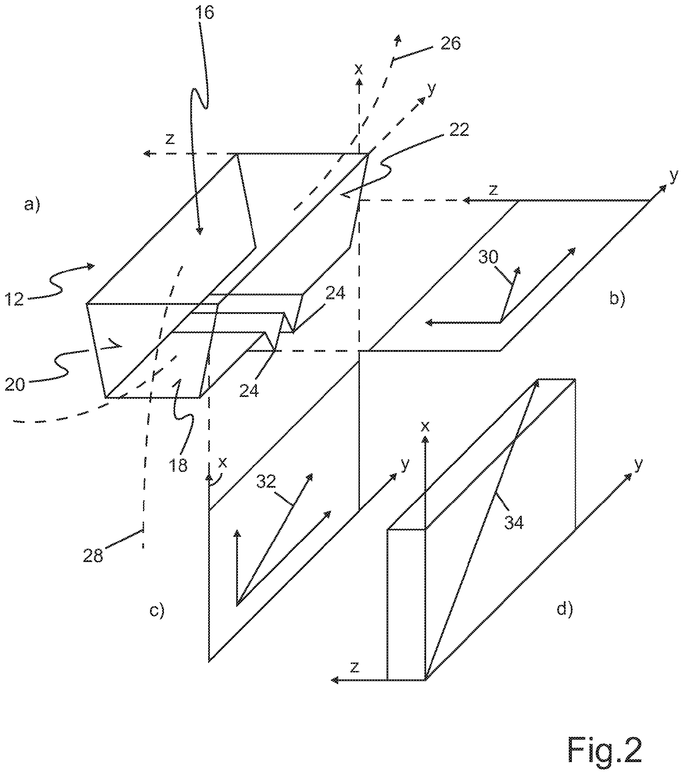

Figur 2a zeigt einen Abschnitt eines ersten langgestreckten Lichtleiters 12 in einer perspektivischen und schematischen Ansicht. Der erste Lichtleiter 12 weist eine Vorderseite 16, eine Rückseite 18 sowie die Vorderseite 16 und die Rückseite 18 verbindende Seitenflächen 20, 22 auf. Die Rückseite 18 weist Lichtumlenkelemente 24 auf, die z. B. die dargestellte Prismenform besitzen und als Vertiefungen in der Rückseite 18 oder als Erhöhungen auf der Rückseite 18 realisiert sind.

Der erste Lichtleiter 12 ist durch seine Form und seine optischen Materialeigenschaften dazu eingerichtet, in seinem Inneren propagierendes Licht, das an seinen Seitenflächen 20, 22 und an seiner Vorderseite 16 interne Totalreflexionen erfährt, in einer Längsrichtung 26 zu leiten und an seinen Lichtumlenkelementen 24 reflektiertes Licht über seine Vorderseite 16 austreten zu lassen. Die Vorderseite 16 dient damit insbesondere als Lichtaustrittsfläche des ersten Lichtleiters 12.

Aus Gründen der Übersichtlichkeit sind in der Figur 2a lediglich zwei Lichtumlenkelemente 24 dargestellt. Losgelöst von dieser vereinfachten Darstellung soll der reale Lichtleiter 12 jedoch eine Vielzahl solcher Lichtumlenkelemente 24 aufweisen, die in vorbestimmter Weise in der Rückseite 18 verteilt, insbesondere regelmäßig verteilt, angeordnet sind.

Beim eingangs genannten Stand der Technik besitzt der langgestreckte erste Lichtleiter 12 eine Ringform, wobei die vom Ring eingeschlossene Fläche in der y-z-Ebene und damit senkrecht zur Abstrahlrichtung x liegt.

Der gestrichelte Pfeil 26 repräsentiert eine Längsrichtung des ersten Lichtleiters 12, die auch als Führungslinie verstanden werden kann. Die Führungslinie 26 kann als Bahn der Schwerpunkte von Querschnittsflächen des Lichtleiters 12 aufgefasst werden. Dabei ist jeweils eine Querschnittsfläche gemeint, deren Flächennormale parallel zur Längsausdehnung des Lichtleiters 12 liegt.

Für den Fall eines Lichtleiters, der die Form eines langen Zylinders besitzt, sind diese Querschnitte also Kreisflächen. Die Flächenschwerpunkte sind dann die geometrischen Mittelpunkte, und die Führungslinie ist dann die Zylinderachse.

Im Fall eines langestreckten Lichtleiters wird die Hauptausbreitungsrichtung des in ihm propagierende Licht im Wesentlichen der Führungsrichtung des Lichtleiters folgen.

Der gekrümmte Verlauf der Führungslinie 26 in der Fig. 2a deutet einen gekrümmten Verlauf des ersten Lichtleiters 12 an. Die Einkopplung von Licht in den ersten Lichtleiter 12 erfolgt über einen zweiten Lichtleiter, der sich an wenigstens eine der Seitenflächen 20, 22 des ersten Lichtleiters 12 anschließt. Der zweite Lichtleiter ist in der Figur 2 aus Gründen der Übersichtlichkeit nicht dargestellt.

Dargestellt ist jedoch eine Führungslinie 28, längs der das im zweiten Lichtleiter propagierende Licht in den ersten Lichtleiter 12 eintritt. Im zweiten Lichtleiter propagierendes Licht tritt in der dargestellten Ausgestaltung über die Seitenfläche 20 in den ersten Lichtleiter 12 ein. Der zweite Lichtleiter ist dabei relativ zum ersten Lichtleiter 12 so angeordnet, dass die Ausbreitungsrichtung des Lichtes beim Eintritt in den ersten Lichtleiter etwa in der x-y-Ebene liegt.

Figur 2b verdeutlicht die Lage einer solchen Ausbreitungsrichtung 30 beim Eintritt in den ersten Lichtleiter 12 beim Stand der Technik, während die Figur 2c die Lage einer solchen Ausbreitungsrichtung 32 bei einer Ausgestaltung der Erfindung verdeutlicht. Die Fig. 2d zeigt die Lage einer Ausbreitungsrichtung 34 des in den ersten Lichtleiters 12 eintretenden Lichtes bei einer weiteren Ausgestaltung der Erfindung.

Die dem Stand der Technik entsprechende Ausbreitungsrichtung 30 Technik besitzt nur eine y-Richtungskomponente und eine z-Richtungskomponente und liegt daher in der x-y-Ebene, die bei beim Stand der Technik der Ringebene entspricht. Das eingekoppelte Licht weist daher eine quer zur Reihe der Lichtumlenkelemente 24 (quer zur Richtung 26) weisende Richtungskomponente auf. Dagegen besitzt die Ausbreitungsrichtung 32 bei der Ausgestaltung der Erfindung, auf die sich die Figur 2c bezieht, eine x-Richtungskomponente und eine y-Richtungskomponente und liegt daher in der x-y-Ebene.

Figur 2d zeigt eine Ausbreitungsrichtung 34, die eine x-Richtungskomponente, eine y-Richtungskomponente und eine z-Richtungskomponente 36 aufweist. Die Ausbreitungsrichtung 34 stellt ebenfalls eine mittlere Lichtausbreitungsrichtung dar, mit der im zweiten Lichtleiter propagierendes Licht über wenigstens eine der Seitenflächen 20, 22 des ersten Lichtleiters 12 in den ersten Lichtleiter 12 eintritt. Die x-Richtungskomponente weist zur Vorderseite 16 des ersten Lichtleiters 12, die als Lichtaustrittsfläche dient. Die x-Richtungskomponente ist darüber hinaus senkrecht zur Längsrichtung 26 des ersten Lichtleiters 12 angeordnet. Die x-Richtungskomponente ist auch größer als die zur x-Richtungskomponente und zur Längsrichtung 26 senkrechte z-Richtungskomponente.

Die Figur 2d repräsentiert damit eine Ausgestaltung, bei der der zweite Lichtleiter so mit dem ersten Lichtleiter 12 gekoppelt ist, dass im zweiten Lichtleiter propagierendes Licht über wenigstens eine der Seitenflächen 20, 22 des ersten Lichtleiters 12 mit einer mittleren Lichtausbreitungsrichtung 34 in den ersten Lichtleiter 12 eintritt, deren zur Lichtaustrittsfläche 16 des ersten Lichtleiters 12 weisende und zu dessen Längsrichtung 26 senkrechte Richtungskomponente (x-Richtungskomponente) größer ist als die zu dieser Richtungskomponente und zur Längsrichtung 26 senkrechte Richtungskomponente (z-Richtungskomponente).

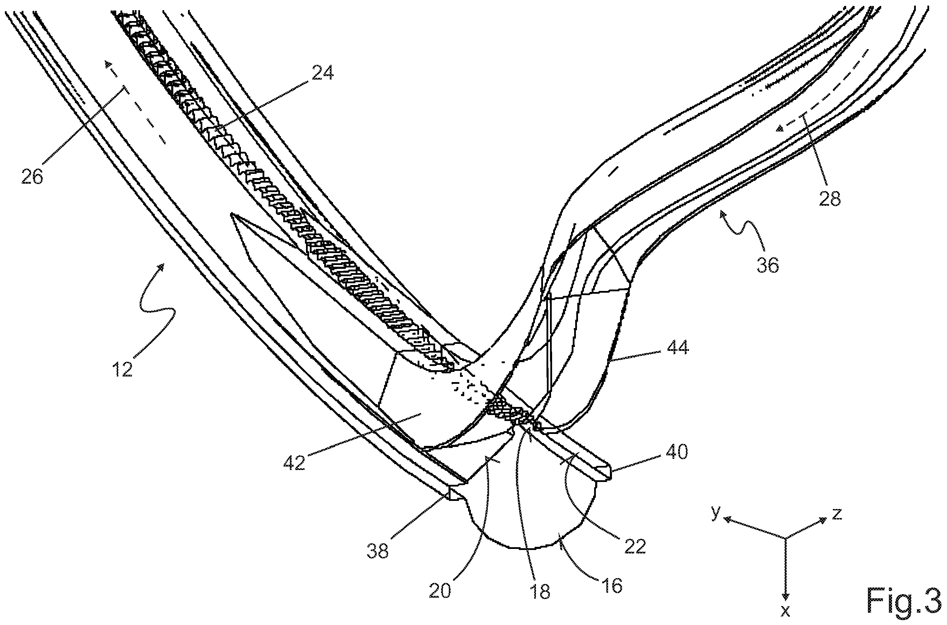

Figur 3 zeigt eine perspektivische Darstellung einer Anordnung eines ersten Lichtleiters 12 und eines zweiten Lichtleiters 36 in einem Bereich, in dem beide optisch miteinander gekoppelt sind. Der erste Lichtleiter 12 weist eine Vorderseite 16, eine der Vorderseite 16 gegenüberliegende und Lichtumlenkelemente 24 aufweisende Rückseite 18 sowie die Vorderseite 16 und die Rückseite 18 miteinander verbindende Seitenflächen 20, 22 auf. Der erste Lichtleiter 12 ist durch seine Geometrie und durch seine optischen Materialeigenschaften dazu eingerichtet, Licht, das an seinen Seitenflächen 20, 22 und an seiner Vorderseite 16 im Innern des Lichtleiters 12 interne Totalreflexionen erfährt, entlang einer Längsrichtung 26 des ersten Lichtleiters 12 zu leiten. Der erste Lichtleiter 12 ist ferner dazu eingerichtet, an seinen Lichtumlenkelementen 24 reflektiertes Licht über seine als Lichtaustrittsfläche dienende Vorderseite 16 austreten zu lassen.

Der zweite Lichtleiter 36 ist mit dem ersten Lichtleiter 12 optisch so gekoppelt, dass im zweiten Lichtleiter 36 längs der Führungslinie 28 propagierendes Licht über die beiden Seitenflächen 20, 22 des ersten Lichtleiters 12 mit einer mittleren Lichtausbreitungsrichtung in den ersten Lichtleiter 12 eintritt, die folgende Eigenschaften aufweist: Ihre zur Lichtaustrittsfläche 16 und zur Längsrichtung 26 des ersten Lichtleiters 12 senkrechte Richtungskomponente (x-Richtungskomponente) ist größer als ihre Richtungskomponente (in z-Richtung), die sowohl zur Längsrichtung 26 als auch zur x-Richtung senkrecht ist.

Die Einkopplung des Lichtes erfolgt insbesondere in einem Abschnitt des ersten Lichtleiters 12, der eine zur Auskopplung von Licht eingerichtete Geometrie aufweist. In der dargestellten Ausgestaltung wird diese Geometrie durch die Lichtumlenkelemente 24 realisiert.

Dabei erfolgt die Einkopplung so, dass sie die im gleichen Volumen des betroffenen Lichtleiterabschnitts auftretende Auskopplung möglichst wenig beeinträchtigt, um störende Inhomogenitäten in der Helligkeit der leuchtenden Lichtaustrittsseite des Lichtleiters 12, also im Erscheinungsbild des Lichtleiters 12, zu vermeiden.

In einer bevorzugten Ausgestaltung erfolgt die Einkopplung weitgehend orthogonal zu den quer zur Längsrichtung 26 ausgerichteten Kanten der Lichtumlenkelemente 24, die hier als Prismen realisiert sind.

Die Einkopplung erfolgt in der dargestellten Ausgestaltung über Flächen 20, 22, die nicht im vorderen Bereich des ersten Lichtleiters 12 angeordnet sind, sondern eher im hinteren Bereich des ersten Lichtleiters 12 liegen. Dabei wird hier unter dem hinteren Bereich der Teil des Lichtleiterquerschnitts verstanden, der nicht von der konvexen Vorderseite 16 begrenzt wird. In der dargestellten Ausgestaltung wird der vordere Bereich mit der Vorderseite 16 durch Vorsprünge 38, 40 vom hinteren Bereich des Lichtleiters 12 getrennt.

Der hintere Bereich umfasst in der dargestellten Ausgestaltung schräg angeordnete Seitenflächen 20, 22 und eine schmale Rückseite 18, deren Breite der Breite der Lichtumlenkelemente 24 entspricht.

Mit den Seitenflächen 20, 22 werden bei dieser Ausgestaltung Flächenbereiche des ersten Lichtleiters 12 für die Einkopplung genutzt, die keine weiteren optischen Funktionen erfüllen müssen, außer dass sie eine Grenzfläche bilden, die das im Inneren des ersten Lichtleiters 12 im Mittel in dessen Längsrichtung 26 propagierende Licht durch intern erfolgende Totalreflexionen im Lichtleiter 12 halten und durch die internen Totalreflexionen eine homogene Durchmischung der Richtungen des Lichts bewirken.

Die als Lichtaustrittsseite dienende Vorderseite 16 ist in der dargestellten Ausgestaltung konvex gewölbt. Dadurch wird eine Linsenwirkung erzielt, die die von außen durch die Vorderseite 16 hindurch sichtbare Breite der Lichtumlenkelemente 24 zu Lasten der sichtbaren Breite der schrägen Seitenflächen 20, 22 vergrößert.

Besonders bevorzugt ist eine Querschnittsgeometrie, bei der die durch das Material des Lichtleiters 12 und die Krümmung seiner Vorderseite 12 erzielte Linsenwirkung und die Breite der Lichtumlenkelemente 24 in z-Richtung sowie die verbleibende Breite der Seitenflächen 20, 22 in z-Richtung so aufeinander abgestimmt sind, dass durch die Vorderseite 16 hindurch nur noch die Lichtumlenkelemente 24 sichtbar sind und die Seitenflächen 20, 22 nicht mehr sichtbar sind.

Dadurch ist die über die Seitenflächen 20, 22 erfolgte Kopplung des ersten Lichtleiters 12 und des zweiten Lichtleiters 36 von vorne nicht erkennbar. Dies trägt vorteilhaft zu einem homogenen Erscheinungsbild der leuchtenden Vorderseite 16 des ersten Lichtleiters 12 bei.

Die in der Figur 3 dargestellte Ausgestaltung zeichnet sich darüber hinaus durch einen Verlauf ihrer Führungslinien 26, 28 aus, bei dem diese Führungslinien 26, 28 im Bereich der Einkopplung, also dort, wo das Licht vom zweiten Lichtleiter 36 in den ersten Lichtleiter 12 übertritt, einen flachen Winkel miteinander bilden. Dieser Winkel ist bevorzugt kleiner als fünf Grad und kann im Idealfall einen Wert von null annehmen. Dann laufen die Führungslinien 26 und 28 stückweise parallel zueinander.

Der zur Einkopplung dienende zweite Lichtleiter 36 ist bevorzugt so ausgestaltet, dass er das einzukoppelnde Licht zunächst in einem Abschnitt mit zusammenhängender Querschnittsfläche an den ersten Lichtleiter 12 heranführt und sich bei zunehmender Annäherung an den ersten Lichtleiter 12 in zwei Zweige 42, 44 aufspaltet, von denen ein erster Zweig 42 in eine erste Seitenfläche 20 des ersten Lichtleiters 12 übergeht und von denen ein zweiter Zweig 44 in eine zweite Seitenfläche 22 des ersten Lichtleiters 12 übergeht.

Der Übergang erfolgt bevorzugt so, dass sich die geometrischen Formen des ersten Lichtleiters 12 und des zweiten Lichtleiters 36 am Ort der Einkopplung durchdringen.

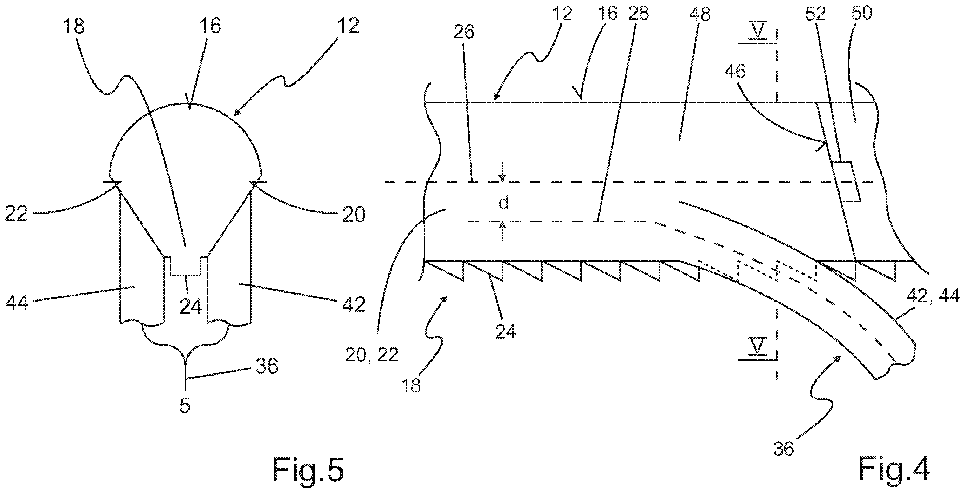

Fig. 4 zeigt, wie dabei der Winkel zwischen den Führungslinien 28 der beiden Zweige 42, 44 des zweiten Lichtleiters 36 auf der einen Seite und der Führungslinie 26 des ersten Lichtleiters 12 auf der anderen Seite immer flacher wird. In einer bevorzugten Ausgestaltung sinkt dieser Wert auf den Wert Null ab, so dass die genannten Führungslinien 26, 28 parallel in einem gemeinsamen Lichtleiterquerschnitt auslaufen. Dabei verbleibt in einer Ausgestaltung ein Abstand d zwischen den Führungslinien 26, 28 dort, wo der einkoppelnde Lichtleiterabschnitt 36 endet.

Die Querschnitte der einkoppelnden Zweige 42, 44 des zweiten Lichtleiters 36 verschwinden dabei vollständig im Querschnitt des ersten Lichtleiters 12.

Dadurch wird der gesamte Lichtstrom, der mit den beiden Zweigen des zweiten Lichtleiters 36 transportiert wird, in den ersten Lichtleiter 12 eingespeist.

Durch die hier vorgestellte Mitteneinkopplung wird ermöglicht, dass die Reihenanordnung der Lichtumlenkelemente 24 auch im Bereich der Einkopplung nicht unterbrochen werden muss, so dass sich ein einheitliches Erscheinungsbild des erleuchtenden Lichtleiters 12 ergibt.

Die Verbindung des ersten Lichtleiters 12 und des zweiten Lichtleiters 36 wird bevorzugt als einstückiges Spritzgussteil hergestellt. Dabei weist das Spritzgussteil bevorzugt dort ein Ende 46 auf, wo die Zweige 42, 44 des zweiten Lichtleiters 36 so nahe am ersten Lichtleiter 12 verlaufen, dass eine einstückige Formgebung ohne das genannte Ende 46 dazu führen würde, dass komplexe Hinterschnittgeometrien erforderlich werden. Die Figur 4 zeigt mit der Anordnung des Endquerschnittes 46 des ersten Lichtleiters 12 im Bereich der Annäherung der Zweige des zweiten Lichtleiters 36 eine solche Ausgestaltung.

Figur 4 zeigt also insbesondere eine Einkopplung von Licht in einen ersten Lichtleiter 12, die nicht über Endflächen des Lichtleiters 12, sondern über Seitenflächen 20, 22 des Lichtleiters 12 erfolgt. Dabei wird ein zur Einkopplung dienender zweiter Lichtleiter 36 verwendet, der sich in zwei Zweige 42, 44 aufspaltet, bevor er sich mit dem mit Prismen als Lichtumlenkelementen 24 versehenen ersten Lichtleiter 12 möglichst tangential verbindet. Die beiden Zweige 42, 44 des zweiten Lichtleiters 36 laufen bei einem horizontal angeordneten Lichtleiter 12 oberhalb und unterhalb, beziehungsweise rechts und links von der Reihenanordnung der Lichtumlenkelemente 24 möglichst tangential in den ersten Lichtleiter 12 hinein.

Um den Lichtleiter mit der dargestellten Mitteneinkopplung herstellen zu können, muss entweder der erste Lichtleiter 12 oder der zweite Lichtleiter 36 in der Nähe der Einkopplung geteilt werden, um Hinterschnitte zu vermeiden. Um eine sichere Verbindung der separat hergestellten Teile zu ermöglichen, werden vorteilhafterweise integrierte Zentriernasen oder Rasthaken verwendet. Fig. 4 zeigt eine Ausgestaltung mit einer Unterteilung des ersten Lichtleiters 12 in zwei Abschnitte 48, 50, die an einem Ende 46 in optischer Kopplung miteinander verbunden sind und dabei durch Rasthaken 52 formschlüssig gekoppelt sind.

Fig. 5 zeigt einen Querschnitt durch die Anordnung der beiden Lichtleiter 12 und 36 im Bereich der Einkopplung. Die als Einkoppelarme dienenden beiden Zweige 42, 44 des zweiten Lichtleiters 36 laufen seitlich an den in einer Reihe angeordneten Lichtumlenkelementen 24 des ersten Lichtleiters 12 vorbei und schmiegen sich dabei an den ersten Lichtleiter 12 an, beziehungsweise dringen in den ersten Lichtleiter 12 ein.

Durch einen Lichtleiterquerschnitt mit einem Radius oder einer elliptischen Form der Vorderseite 16 werden die als Lichtumlenkelemente 24 dienenden Auskoppelprismen so vergrößert dargestellt, dass die Prismenstruktur die gesamte Breite des erleuchteten Lichtleiters einzunehmen scheint. Dies ergibt sich aufgrund der beschriebenen Linsenwirkung. Der von der sichtbaren Vorderseite abgewandte Bereich des Lichtleiterquerschnitts weist bevorzugt eine trapezähnliche Kontur mit den Seitenflächen 20 und 22 auf, wobei in die vergleichsweise kurze Rückseite 18 die Lichtumlenkelemente 24 in Form von Prismen integriert sind.

## Patentansprüche

1. Kraftfahrzeugbeleuchtungseinrichtung (10) mit einem langgestreckten ersten Lichtleiter (12), der eine Vorderseite (16), eine der Vorderseite (16) gegenüberliegende und Lichtumlenkelemente (24) aufweisende Rückseite (18) sowie die Vorderseite (16) und die Rückseite (18) verbindende Seitenflächen (20, 22) aufweist und der dazu eingerichtet ist, Licht, das an seinen Seitenflächen (20, 22) und seiner Vorderseite (16) interne Totalreflexionen erfährt, in einer Längsrichtung (26) des Lichtleiters (12) zu leiten, und an seinen Lichtumlenkelementen (24) reflektiertes Licht über seine Vorderseite (16) austreten zu lassen, und mit einem zweiten Lichtleiter (36), der dazu eingerichtet ist, Licht in den ersten Lichtleiter (12) einzukoppeln, der zweite Lichtleiter (36) so mit dem ersten Lichtleiter (12) gekoppelt ist, dass im zweiten Lichtleiter (36) längs einer Führungslinie (28) des zweiten Lichtleiters propagierendes Licht über wenigstens eine der Seitenflächen (20, 22) des ersten Lichtleiters (12) mit einer mittleren Lichtausbreitungsrichtung (32; 34) in den ersten Lichtleiter (12) eintritt, deren zur Vorderseite (16) des ersten Lichtleiters (12) weisende und zu dessen Längsrichtung (26) senkrechte Richtungskomponente größer ist als deren dazu und zur Längsrichtung senkrechte Richtungskomponente, **dadurch gekennzeichnet, dass** die als Lichtaustrittsseite dienende Vorderseite (16) konvex gewölbt ist und dass der erste Lichtleiter (12) eine Querschnittsgeometrie aufweist, bei der die durch das Material des Lichtleiters (12) und die konvexe Wölbung seiner Vorderseite (12) erzielte Linsenwirkung und die Breite der Lichtumlenkelemente (24) sowie die verbleibende Breite von Seitenflächen (20, 22) so aufeinander abgestimmt sind, dass durch die Vorderseite (16) hindurch nur noch die Lichtumlenkelemente (24) sichtbar sind und die Seitenflächen (20, 22) nicht mehr sichtbar sind.

2. Kraftfahrzeugbeleuchtungseinrichtung (10) nach Anspruch 1, **dadurch gekennzeichnet, dass** die Rückseite (18) Lichtumlenkelemente (24) aufweist, die als Vertiefungen in der Rückseite (18) oder als Erhöhungen auf der Rückseite (18) realisiert sind.

3. Kraftfahrzeugbeleuchtungseinrichtung (10) nach einem der vorhergehenden Ansprüche, **dadurch gekennzeichnet, dass** die Einkopplung des Lichtes in einem Abschnitt des ersten Lichtleiters (12) erfolgt, der eine zur Auskopplung von Licht eingerichtete Geometrie aufweist.

4. Kraftfahrzeugbeleuchtungseinrichtung (10) nach einem der vorhergehenden Ansprüche, **dadurch gekennzeichnet, dass** Kanten der Lichtumlenkelemente (24) quer zu einer Längsrichtung (26) des ersten Lichtleiters (12) ausgerichtet sind und dass die Einkopplung weitgehend orthogonal zu den quer zu der Längsrichtung (26) des ersten Lichtleiters (12) ausgerichteten Kanten der Lichtumlenkelemente (24) erfolgt.

5. Kraftfahrzeugbeleuchtungseinrichtung (10) nach einem der vorhergehenden Ansprüche, **dadurch gekennzeichnet, dass** Flächenbereiche des ersten Lichtleiters (12) für die Einkopplung genutzt werden, die keine weiteren optischen Funktionen erfüllen müssen, außer dass sie eine Grenzfläche bilden, die das im Inneren des ersten Lichtleiters (12) im Mittel in dessen Längsrichtung (26) propagierende Licht durch intern erfolgende Totalreflexionen im Lichtleiter (12) halten und durch die internen Totalreflexionen eine homogene Durchmischung der Richtungen des Lichts bewirken.

6. Kraftfahrzeugbeleuchtungseinrichtung (10) nach einem der vorhergehenden Ansprüche, **gekennzeichnet durch** einen Verlauf von Führungslinien (26, 28) der beiden Lichtleiter, bei dem diese Führungslinien (26, 28) im Bereich der Einkopplung stückweise parallel zueinander verlaufen.

7. Kraftfahrzeugbeleuchtungseinrichtung (10) nach einem der vorhergehenden Ansprüche 1, **dadurch gekennzeichnet, dass** der zur Einkopplung dienende zweite Lichtleiter (36) so ausgestaltet ist, dass er das einzukoppelnde Licht zunächst in einem Abschnitt mit zusammenhängender Querschnittsfläche an den ersten Lichtleiter (12) heranführt und sich bei zunehmender Annäherung an den ersten Lichtleiter (12) in zwei Zweige (42, 44) aufspaltet, von denen ein erster Zweig (42) in eine erste Seitenfläche (20) des ersten Lichtleiters (12) übergeht und von denen ein zweiter Zweig (44) in eine zweite Seitenfläche (22) des ersten Lichtleiters (12) übergeht.

8. Kraftfahrzeugbeleuchtungseinrichtung (10) nach einem der vorhergehenden Ansprüche, **dadurch gekennzeichnet, dass** die Verbindung des ersten Lichtleiters (12) und des zweiten Lichtleiters (36) ein einstückiges Spritzgussteil ist.

## Claims

1. A motor vehicle lighting device (10) having a longitudinally extending first optical waveguide (12), which has a front side (16), a back side (18), opposite the front side (16), having has light deflection elements (24), and side faces (20, 22) connecting the front side (16) and the back side (18), and which first optical waveguide is arranged for guiding light, which experiences internal total reflections at its side faces (20, 22) and its front side (16), in a longitudinal direction (26) of the optical waveguide (12) and for causing light, reflected at its light deflection elements (24), to exit via its front side (16), and having a second optical waveguide (36), which is arranged for coupling light into the first optical waveguide (12), and the second optical waveguide (36) is coupled with the first optical waveguide (12) such that in the second optical waveguide (36), light, propagated along a guide line (28) of the second optical waveguide via at least one of the side faces (20, 22) of the first optical waveguide (12), enters with a mean light propagation direction (32; 34) into the first optical waveguide (12), the directional component of which, pointing toward the front side (16) of the first optical waveguide (12) and being perpendicular to its longitudinal direction (26), is greater than its directional component perpendicular thereto and to the longitudinal direction, **characterized in that** the front side (16) serving as a light exit side is curved in convex fashion; and that the first optical waveguide (12) has a cross-sectional geometry, in which the lens effect attained by the material of the optical waveguide (12) and by the convex curvature of its front side (12) and the width of the light deflection elements (24) as well as the remaining width of side faces (20, 22) are adapted to one another such that through the front side (16), only the light deflection elements (24) are now visible, and the side faces (20, 22) are no longer visible.

2. The motor vehicle lighting device (10) of claim 1, **characterized in that** the back side (18) has light deflection elements (24), which are embodied as indentations in the back side (18) or as raised areas on the back side (18).

3. The motor vehicle lighting device (10) of one of the foregoing claims, **characterized in that** the coupling in of the light is effected in a portion of the first optical waveguide (12) that has a geometry arranged for outcoupling light.

4. The motor vehicle lighting device (10) of one of the foregoing claims, **characterized in that** edges of the light deflection elements (24) are oriented transversely to a longitudinal direction (26) of the first optical waveguide (12); and that the coupling in is effected largely orthogonally to the edges of the light deflection element (24), which edges are oriented transversely to the longitudinal direction (26) of the first optical waveguide (12).

5. The motor vehicle lighting device (10) of one of the foregoing claims, **characterized in that** surface regions of the first optical waveguide (12) are used for the coupling in, which regions need not perform any further optical functions, except that they form a boundary face, which keep the light, propagated in the interior of the first optical waveguide (12), in the middle in its longitudinal direction (26) by means of internally occurring total reflections in the optical waveguide (12), and which by means of the internal total reflections effect homogeneous mixing of the directions of the light.

6. The motor vehicle lighting device (10) of one of the foregoing claims, **characterized by** a course of guide lines (26, 28) of the two optical waveguides in which course these guide lines (26, 28) extend intermittently parallel to one another in the vicinity of the coupling in.

7. The motor vehicle lighting device (10) of one of the foregoing claims 1, **characterized in that** the second optical waveguide (36), serving to provide the coupling in, is designed such that it first brings the light that is to be coupled in in a portion with a cohesive cross-sectional surface to the first optical waveguide (12), and upon increasing proximity to the first optical waveguide (12) splits into two branches (42, 44), of which a first branch (42) merges with a first side face (20) of the first optical waveguide (12) and a second branch (44) merges with a second side face (22) of the first optical waveguide (12).

8. The motor vehicle lighting device (10) of one of the foregoing claims, **characterized in that** the connection of the first optical waveguide (12) and the second optical waveguide (36) is a one-piece injection-molded part.

## Revendications

1. Dispositif d'éclairage de véhicule automobile (10) comprenant un premier guide de lumière allongé (12) qui présente une face avant (16), une face arrière (18) opposée à la face avant (16) et comportant des éléments de déviation de lumière (24), ainsi que des surfaces latérales (20, 22) reliant la face avant (16) et la face arrière (18), et qui est agencé pour guider la lumière, qui subit des réflexions internes totales au niveau de ses surfaces latérales (20, 22) et de sa face avant (16), dans une direction longitudinale (26) du guide de lumière (12), et pour laisser sortir la lumière réfléchie au niveau de ses éléments de déviation de lumière (24) par sa face avant (16), et comprenant un second guide de lumière (36) qui est agencé pour coupler la lumière dans le premier guide de lumière (12), le second guide de lumière (36) étant couplé avec le premier guide de lumière (12) de façon telle que la lumière se propageant dans le second guide de lumière (36) le long d'une ligne de guidage (28) du second guide de lumière pénètre dans le premier guide de lumière (12) via au moins l'une des surfaces latérales (20, 22) du premier guide de lumière (12) selon une direction de propagation de la lumière (32; 34) médiane, dont la composante directionnelle orientée vers la face avant (16) du premier guide de lumière (12) et perpendiculaire à sa direction longitudinale (26) est plus grande que sa composante directionnelle perpendiculaire à celle-ci et à la direction longitudinale, **caractérisé en ce que** la face avant (16) servant de face de sortie de lumière est courbée de manière convexe, et **en ce que** le premier guide de lumière (12) présente une géométrie de section transversale dans laquelle l'effet de lentille, obtenu par le matériau du guide de lumière (12) et la courbure convexe de sa face avant (12), et la largeur des éléments de déviation de lumière (24), ainsi que la largeur restante des surfaces latérales (20, 22) sont coordonnés entre eux de telle sorte qu'au travers de la face avant (16), seuls sont encore visibles les éléments de déviation de lumière (24), les surfaces latérales (20, 22) n'étant plus visibles.

2. Dispositif d'éclairage de véhicule automobile (10) selon la revendication 1, **caractérisé en ce que** la face arrière (18) présente des éléments de déviation de lumière (24) qui sont réalisés sous forme de creux dans la face arrière (18) ou de crêtes sur la face arrière (18).

3. Dispositif d'éclairage de véhicule automobile (10) selon l'une des revendications précédentes, **caractérisé en ce que** le couplage de la lumière s'opère dans un segment du premier guide de lumière (12) qui présente une géométrie conçue pour le découplage de la lumière.

4. Dispositif d'éclairage de véhicule automobile (10) selon l'une des revendications précédentes, **caractérisé en ce que** des bords des éléments de déviation de lumière (24) sont orientés transversalement à une direction longitudinale (26) du premier guide de lumière (12), et **en ce que** le couplage s'effectue de manière sensiblement orthogonale aux bords des éléments de déviation de lumière (24) orientés transversalement à la direction longitudinale (26) du premier guide de lumière (12).

5. Dispositif d'éclairage de véhicule automobile (10) selon l'une des revendications précédentes, **caractérisé en ce que** des zones de surface du premier guide de lumière (12) sont utilisées pour le couplage, lesquelles ne doivent remplir aucune autre fonction optique que celle consistant à former une interface qui, par des réflexions totales internes, retient dans le guide de lumière (12) la lumière se propageant à l'intérieur du premier guide de lumière (12), en moyenne dans sa direction longitudinale (26), et opère par les réflexions totales internes un mélange homogène des directions de la lumière.

6. Dispositif d'éclairage de véhicule automobile (10) selon l'une des revendications précédentes, **caractérisé par** un tracé des lignes de guidage (26, 28) des deux guides de lumière, dans lequel ces lignes de guidage (26, 28) s'étendent parallèlement les unes aux autres dans la région du couplage.

7. Dispositif d'éclairage de véhicule automobile (10) selon l'une des revendications précédentes, **caractérisé en ce que** le second guide de lumière (36) servant au couplage est configuré de façon telle qu'il approche la lumière à coupler du premier guide de lumière (12) tout d'abord en un segment ayant une surface de section transversale cohérente puis, à mesure que la lumière s'approche du premier conducteur (12), en se divisant en deux branches (42, 44), dont une première branche (42) se raccorde à une première surface latérale (20) du premier guide de lumière (12) et dont une seconde branche (44) se raccorde à une seconde surface latérale (22) du premier guide de lumière (12).

8. Dispositif d'éclairage de véhicule automobile (10) selon l'une des revendications précédentes, **caractérisé en ce que** l'assemblage du premier guide de lumière (12) et du second guide de lumière (36) est une pièce moulée par injection d'un seul tenant.
